# EUROPEAN PATENT APPLICATION

(11) **EP 2 631 684 A1**
(43) Date of publication of application: **28.08.2013**
(21) Application number: 13168405.2
(22) Date of filing: 25.01.2008
(51) Int. Cl.: G01V 11/00, E21B 47/12

(54) **Self-detection of a modulating carrier and an optimum carrier in a downhole telemetry system**

(30) Priority: 29.01.2007 US 668044
(62) Divisional of application: 08250315.2
(71) Applicant: HALLIBURTON ENERGY SERVICES, INC., Dallas, TX 75381-9052 (US)
(72) Inventor: Kyle, Donald G., The Colony, TX Texas 75056 (US); Fink, Kevin D., Frisco, TX Texas 75035 (US)
(74) Representative: Bennett, Adrian Robert J.

(57) **Abstract**

A method of detecting a usable downhole wireless telemetry system carrier frequency includes the steps of: transmitting from a first telemetry device a message modulated on a carrier frequency; then checking (76) whether a response to the message is received at the first telemetry device from a second telemetry device; and each time the response is not received, repeating the transmitting and checking steps with an incremented carrier frequency (86).

## Description

The present invention relates generally to equipment utilized and operations performed in conjunction with a subterranean well and, in an embodiment described herein, more particularly provides self-detection of a modulating carrier and an optimum carrier in a downhole telemetry system.

Typical downhole wireless telemetry systems require either prior knowledge of a modulating carrier frequency, or a complex and time-consuming procedure of establishing the modulating carrier frequency, prior to achieving successful transmission of messages containing data and/or commands between multiple telemetry devices.

In one method of "calibrating" the carrier frequency, a wireline probe is installed in a tubular string to communicate with telemetry devices (e.g., acoustic transceivers) interconnected in the tubular string. When initiated by an operator at the surface, the wireline probe prompts one of the telemetry devices to transmit a sweep of frequencies.

The wireline probe is positioned at another telemetry device during the transmission of the frequency sweep, in order to detect characteristics of the received signals. The operator can then select which carrier frequency is optimum for transmission of messages between the two telemetry devices.

It will be appreciated that this method is time-consuming, requires installation and operation of the wireline probe and requires the services of a highly skilled operator. This method, and the method which requires prior knowledge of a particular carrier frequency, are also not suited for coping with changes in the well environment over time (which will also change the optimum carrier frequency), without repeating the expensive and complex operation of calibrating or changing the carrier frequency.

Therefore, it may be seen that improvements are needed in the downhole wireless telemetry art.

An aspect of the present invention provides a method as recited in the appended independent claim 1.

The method may further comprise the step of setting the usable carrier frequency as the frequency on which future messages transmitted between the first and second telemetry devices are to be modulated. Ideally, the step of repeating the transmitting and checking steps may also be performed when the response is received and until a preselected range of carrier frequencies have been transmitted. The method may further comprise the step of evaluating characteristics of the responses received, and selecting a preferred carrier frequency based on the evaluating step. The selecting step is ideally performed without human intervention. The selecting step may be performed at predetermined times without human intervention.

The method may further comprise the step of evaluating characteristics of the responses received, and based on the evaluating step selecting a preferred first carrier frequency for transmissions from the first telemetry device to the second telemetry device and a preferred second carrier frequency for transmissions from the second telemetry device to the first telemetry device. The preferred first and second carrier frequencies may be different frequencies. The response characteristics in the evaluating step may include at least one of signal power level, shape of signal peak, coherence number, error rate, signal to noise ratio, and carrier frequency shift.

The method may further comprise the step of, after the checking step, monitoring a difference between the carrier frequency on which the transmitted message is modulated for transmission from the first telemetry device to the second telemetry device and the carrier frequency on which the response is modulated for transmission from the second telemetry device to the first telemetry device.

The method may further comprise the step of, after the step of repeating the transmitting and checking steps, monitoring a difference between the carrier frequency on which the transmitted message is modulated for transmission from the first telemetry device to the second telemetry device and the carrier frequency on which the response is modulated for transmission from the second telemetry device to the first telemetry device. The monitoring step may be repeated periodically without human intervention. The method may further comprise the step of altering the carrier frequency on which the transmitted message is modulated for transmission from the first telemetry device to the second telemetry device and the carrier frequency on which the response is modulated for transmission from the second telemetry device to the first telemetry device based on a change in the monitored difference. The altering step may be performed without human intervention. The altering step may be performed at predetermined times without human intervention.

The transmitting, checking and repeating steps may be performed without human intervention. The transmitting, checking and repeating steps may be performed at predetermined times without human intervention.

Further features of the present invention are provided as recited in the appended dependent claims.

A method is described below which solves at least one problem in the art. One example is described below in which a usable carrier frequency is automatically detected in a downhole wireless telemetry system, without prior knowledge of the carrier frequency, and without use of a wireline probe or other time-consuming operations. Another example is described below in which a usable and/or preferred carrier frequency is selected automatically and periodically in a manner especially suitable for coping with dynamic changes in a well environment.

A method of detecting a carrier frequency in a downhole wireless telemetry system is described below. The method includes the steps of: transmitting from a first telemetry device one or more message(s) modulated on a predetermined carrier frequency; receiving at a second telemetry device signals including multiple frequencies; and selecting from among the multiple received frequencies the predetermined carrier frequency on which the message is modulated.

A method of detecting a usable downhole wireless telemetry system carrier frequency is described below. The method includes the steps of: transmitting from a first telemetry device one or more message(s) modulated on a carrier frequency; then checking whether a response to the message is received at the first telemetry device from a second telemetry device; and each time the response is not received, repeating the transmitting and checking steps with an incremented carrier frequency.

These and other features, advantages, benefits and objects of the present invention will become apparent to one of ordinary skill in the art upon careful consideration of the detailed description of representative embodiments of the invention hereinbelow and the accompanying drawings, in which similar elements are indicated in the various figures using the same reference numbers.

Embodiments of the present invention will now be described with reference to the accompanying drawings, in which:
FIG. 1 is a schematic partially cross-sectional view of a well system and associated method embodying principles of the present invention;
FIG. 2 is a flowchart of a prior art technique of determining an optimum frequency in a downhole telemetry system;
FIG. 3 is a flowchart of a method for self-detecting a modulating carrier frequency, the method embodying principles of the present invention;
FIG. 4 is a flowchart of a method for determining a usable carrier frequency, the method embodying principles of the present invention; and
FIG. 5 is a flowchart of a method for determining a preferred carrier frequency, the method embodying principles of the present invention.

It is to be understood that the various embodiments of the present invention described herein may be utilized in various orientations, such as inclined, inverted, horizontal, vertical, etc., and in various configurations, without departing from the principles of the present invention. The embodiments are described merely as examples of useful applications of the principles of the invention, which is not limited to any specific details of these embodiments.

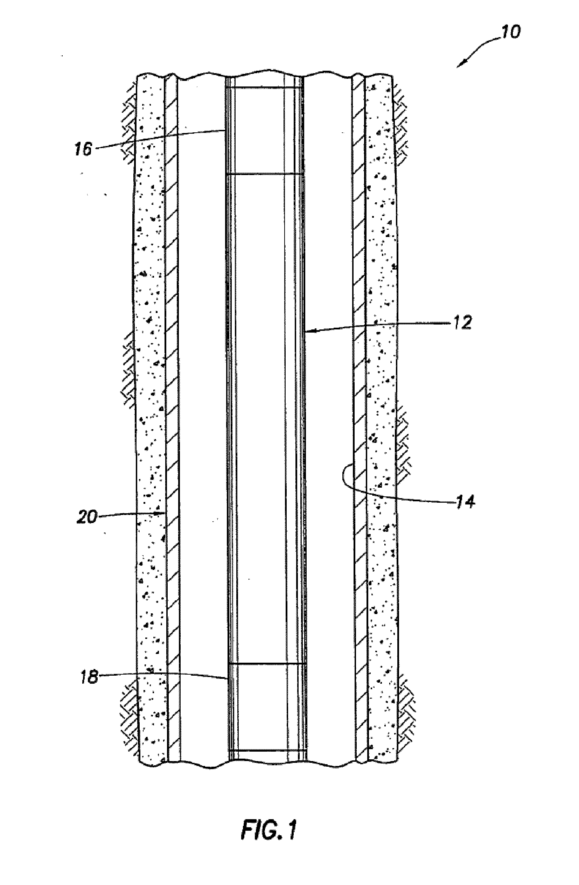

Representatively illustrated in FIG. 1 is a well system 10 and associated method which embody principles of the present invention. In the system 10, a tubular string 12 (such as a production tubing, drilling, testing or other type of tubular string) is installed in a wellbore 14. Multiple wireless telemetry devices 16, 18 (such as acoustic, electromagnetic or other type of telemetry device) are interconnected in the tubular string 12.

Note that it is not necessary for the telemetry devices 16, 18 to be interconnected in the tubular string 12, since one or both of the telemetry devices could be attached to a casing string 20 or another well component. For example, at least one of the telemetry devices 16, 18 could be positioned at a surface or subsea location, attached proximate a wellhead, positioned in a lateral or branch wellbore, etc. Thus, the principles of the invention are not limited at all to the locations of the telemetry devices 16, 18 depicted in FIG. 1.

Only two of the telemetry devices 16, 18 are illustrated, but it should be understood that any number of telemetry devices could be used in keeping with the principles of the invention. A transmitted message may be initiated, relayed and/or received by any of the telemetry devices 16, 18. Preferably, each of the telemetry devices 16, 18 is a transceiver capable of both transmitting and receiving wireless telemetry messages, but it should be understood that it is not necessary for all telemetry devices in a wireless telemetry system to be transceivers, since one or more telemetry devices could be only transmitters or only receivers of telemetry messages.

In one important feature of the well system 10, it is not necessary for a carrier frequency to be preselected for transmissions between the telemetry devices 16, 18 prior to installing the telemetry devices. It also is not necessary for a wireline tool to be installed in the tubular string 12 in a process of selecting an appropriate carrier frequency. In addition, it is not necessary for a time-consuming and complex process to be performed in order to select an appropriate carrier frequency. Furthermore, it is not necessary for a human to participate actively or intervene in the process of selecting an appropriate carrier frequency in the well system (although a human could, for example, initiate the process by powering up the telemetry devices 16, 18, etc.).

Instead, in the well system 10, a method is utilized which automatically determines a carrier frequency used to transmit a message between the telemetry devices 16, 18, and/or a method is utilized which automatically determines a usable carrier frequency for transmissions between the telemetry devices, and which may determine an optimum or preferred carrier frequency.

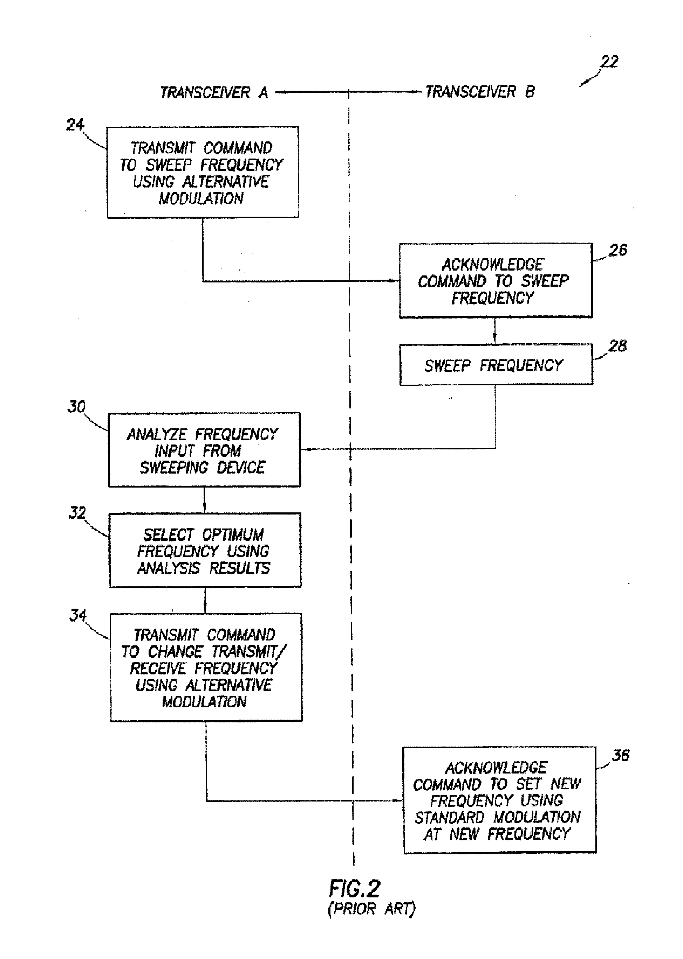

In order to better understand the advantages of the system 10 and associated methods over prior telemetry systems and methods, an example is illustrated in FIG. 2 of a prior art method 22 of determining an appropriate carrier frequency. This method 22 is similar to the method described in U.S. Published Application No. 2003-0142586. Other methods are described in U.S. Patent Nos. 6470996 and 7085194. The entire disclosures of these prior patents and published application are incorporated herein by this reference.

The method 22 utilizes an alternative modulation/demodulation scheme to trigger one telemetry device from another to begin a process of determining optimum carrier frequencies. The telemetry devices are indicated in FIG. 2 as "transceiver A" and "transceiver B."

In step 24, transceiver A transmits a command to transceiver B to sweep frequencies using an alternative modulation. An operator causes the transceiver A to transmit the command. Transceiver B acknowledges the command in step 26, and begins transmitting over a preselected range of frequencies in step 28.

In step 30, the operator analyzes the frequency input from the frequency sweeping device of the transceiver B, and in step 32 the operator selects the optimum frequency (or multiple optimum frequencies in some cases) based on the analysis. The operator then transmits a command to change the transmit/receive frequency, still using the alternative modulation, in step 34.

Transceiver B acknowledges the command to set the new transmit/receive frequency for future messages using standard modulation in step 36. Thus, in the future, messages transmitted between the transceivers A & B will utilize the new frequency, unless a repeat of the method 22 is initiated by the operator to select another new carrier frequency.

It will be appreciated that the method 22 requires a significant amount of human intervention, not only to initiate the method, but also in the frequency sweep analysis, frequency selecting and frequency changing steps. In addition, a substantial amount of time is consumed in the frequency sweep process of step 28. Furthermore, the method 22 does not account for the dynamic nature of the well environment, in which an optimum carrier frequency for transmissions between the transceivers A & B may change over time.

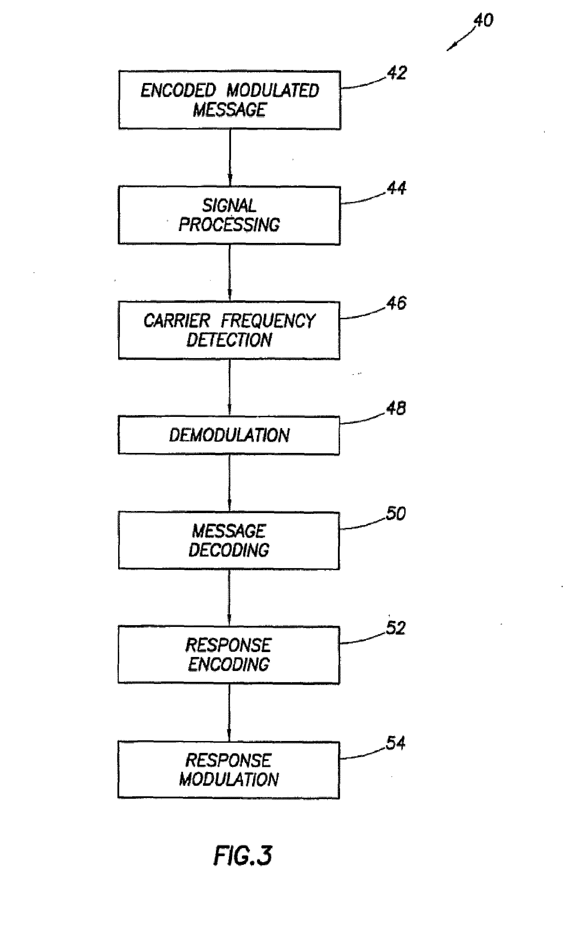

Referring additionally now to FIG. 3, a method 40 for determining a carrier frequency, and which embodies principles of the present invention, is representatively illustrated in flowchart form. The method 40 is described below as if it is used with the well system 10 of FIG. 1, but it should be understood that the method may be used with other well systems.

In this method 40, one telemetry device (such as the telemetry device 16) transmits a message to another telemetry device (such as the telemetry device 18) with the message modulated on a predetermined carrier frequency. The receiving telemetry device 18 automatically, and without human intervention, detects the modulating carrier frequency. By utilizing the method 40, each receiving node in a downhole wireless telemetry system can automatically synchronize to a detected modulating carrier frequency, without the precise optimum carrier frequency between each pair of transmitting and receiving nodes being known prior to installation of the telemetry devices.

In step 42, the message is encoded and modulated on the predetermined carrier frequency. The message is then transmitted from the telemetry device 16 to the telemetry device 18.

In step 44, signals (including multiple frequencies) received by the telemetry device 18 are processed using, for example, techniques such as Fourier transforms, digital filters, tone detection schemes, other spectral analysis techniques, etc.

In step 46, the carrier frequency is detected as being, for example, the dominant frequency resulting from step 44. Thus, the steps 44, 46 result in a selecting of the carrier frequency on which the received message is modulated.

In step 48, the received signal is demodulated using the detected carrier frequency. Such demodulation techniques are well known to those skilled in the art.

In step 50, the message is decoded. In this step, a predefined method of decoding messages is used, i.e., the receiving telemetry device 18 would be preprogrammed with certain decoding and encoding processes.

Assuming a successful decoding of the message, in step 52 a response message is encoded for transmission to the telemetry device 16 which transmitted the initial message.

In step 54, the response message is modulated on the selected carrier frequency (steps 44, 46), and the modulated response is transmitted to the telemetry device 16.

Note that the selected carrier frequency would many times be the same as the predetermined modulating carrier frequency used to transmit the initial message. However, this is not a necessary condition of the method 40.

For example, a frequency shift could occur (e.g., due to natural frequencies of components in the well system through which the message is transmitted). The method 40 is uniquely capable of compensating for such frequency shifts by allowing the receiving telemetry device to automatically detect the dominant carrier frequency.

It should also be understood that the method 40 is not only one-way between transmitting and receiving telemetry devices. For example, if the telemetry device 16 is the transmitting device and the telemetry device 18 is the receiving device for the initial message, then when the response message is transmitted the telemetry device 18 becomes the transmitting device and the telemetry device 16 becomes the receiving device for the response message.

Thus, the method 40 can be performed again, except that this time the telemetry device 16 receives the response message, detects the dominant carrier frequency, and demodulates and decodes the message. In fact, the method 40 may be performed each time a message is transmitted between any two telemetry devices. In this manner, the method 40 permits the continuous updating of the carrier frequencies used for transmission of messages between the telemetry devices over time, thereby automatically compensating for changes in the well environment, changing frequency shifts, etc.

Note, also, that no human intervention is required in the method 40. An operator could, if desired, initiate the method 40 by, for example, powering up the transmitting and receiving telemetry devices, but this is not required since the telemetry devices could be programmed to perform the method 40 automatically at a predetermined time period after installation, at predetermined times, periodically, etc.

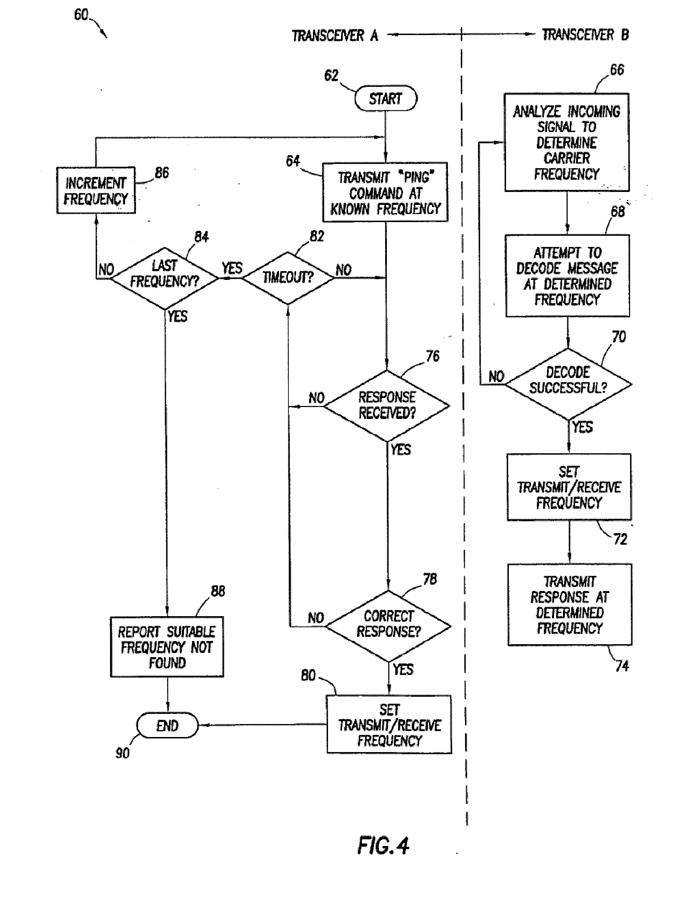

Referring additionally now to FIG. 4, another method 60 is representatively illustrated in flowchart form, with the method embodying principles of the present invention. In this method 60, a usable carrier frequency is selected in a time efficient manner, but without a need to use an initial predetermined carrier frequency to successfully receive a message at a receiving telemetry device, and without a need to complete a time-consuming frequency transmission sweep between telemetry devices.

In step 62, the method 60 is started. Human intervention may be used to start the method 60, if desired, but as with the method 40 described above, the method 60 could alternatively or subsequently be performed automatically (for example, at a predetermined time period after installation, at predetermined times, periodically, etc.).

In step 64, a message is modulated on a known carrier frequency and transmitted from a transmitting telemetry device (such as the telemetry device 16) to a receiving telemetry device (such as the telemetry device 18). Step 64 may be repeated in the method 60, as described more fully below, so it should be understood that the known carrier frequency the first time the step 64 is performed is merely an initial carrier frequency, and subsequent carrier frequencies transmitted in respective repeats of step 64 are incremental variations in the carrier frequency (either upward or downward in frequency, as desired).

It should also be understood that, although the initial carrier frequency first transmitted as the known carrier frequency in step 64 is in a sense a predetermined carrier frequency, it is not necessary in the method 60 for the message modulated on this initial carrier frequency to be successfully received by the receiving telemetry device. Instead, the known carrier frequency transmitted in step 64 is successively incremented as needed until the message is successfully received (i.e., properly demodulated and decoded by the receiving telemetry device), as described more fully below.

The message transmitted in step 64 preferably includes a command of the type known to those skilled in the art as a "ping" command. When properly demodulated and decoded, the command instructs the receiving telemetry device to perform its programmed steps of the method 60.

In step 66, the receiving telemetry device analyzes incoming signals to determine a carrier frequency. In step 68, the receiving telemetry device demodulates the message using the determined carrier frequency, and then decodes the message (or at least attempts to decode the message).

These steps 66, 68 may be similar to the steps 44, 46, 48, 50 described above in the method 40. Thus, it will be appreciated that it is not necessary for the receiving telemetry device to be preprogrammed to demodulate incoming messages using a predetermined carrier frequency.

Instead, all of the benefits of the method 40 (e.g., each receiving node in a downhole wireless telemetry system can automatically synchronize to a detected modulating carrier frequency, without the precise optimum carrier frequency between each pair of transmitting and receiving nodes being known prior to installation of the telemetry devices, minimization of human intervention, ability to adapt to changing well environment, etc.) can also be obtained in the method 60.

In step 70, if the message decoding of step 68 was successful, then the receiving telemetry device is configured or set in step 72 to transmit and receive at the carrier frequency determined in step 66. If the message decoding of step 68 was not successful (i.e., the expected "ping" command did not result from the decoding process), then steps 66, 68 are preferably repeated in additional attempts to determine the carrier frequency transmitted in step 64 and successfully decode the message.

As described below, the carrier frequency transmitted in step 64 will eventually be incremented, so that a new carrier frequency is transmitted, if the message is not successfully decoded by the receiving telemetry device in step 68. Eventually, the carrier frequency will be incremented sufficiently, so that the incremented carrier frequency will be properly determined in step 66 and the message will be successfully decoded in step 68.

It is contemplated, however, that the initial carrier frequency transmitted in step 64 could be properly determined in step 66 and the message successfully decoded in step 68, in which case it would not be necessary to increment the carrier frequency, or for the steps 64, 66, 68 to be repeated. Or only a single increment of the carrier frequency might be required, after which the incremented carrier frequency is properly determined in step 66 and the message is successfully decoded in step 68.

In step 74, a response message is transmitted from the receiving telemetry device to the initial transmitting telemetry device. This step 74 is preferably similar to the steps 52, 54 of the method 40. The carrier frequency on which the response message is modulated could be different from the carrier frequency (either initial or incremented) on which the successfully decoded message was modulated in step 64 due, for example, to frequency shifting as described above.

More than one "ping" command or other message may be transmitted each time step 64 is performed. For example, due to limitations of memory devices and current technology, a first "ping" command could be analyzed to determine the carrier frequency (in step 66), and then a second "ping" command could be demodulated (in step 68).

In step 76, the initial transmitting telemetry device checks to see if a response message has been received from the initial receiving telemetry device. In performing this step 76, the initial transmitting telemetry device could use the steps 44, 46, 48, 50 of the method 40. Alternatively, the initial or incremented known frequency on which the message was just previously transmitted in step 64 could be used in attempts to demodulate the incoming response message in step 76.

If a response message is successfully demodulated and decoded in step 76, then in step 78 the response message is checked to see if it is a correct response and, if so, then in step 80 the initial transmitting telemetry device is configured or set to transmit and receive messages modulated on the carrier frequency determined or used in step 76. Thus, steps 76, 78 result in a selecting of a usable carrier frequency, which is set as the transmitting and receiving frequency in step 80.

In addition, an acknowledgement message could be sent in step 80 from the initial transmitting telemetry device to the initial receiving telemetry device to set the carrier frequency determined in step 66 as the default receiving carrier frequency. The initial receiving telemetry device could set the carrier frequencies as described above for step 72, and only change these set carrier frequencies if prompted to do so by the acknowledgement message transmitted in step 80. For example, after transmitting the response in step 74, the initial receiving telemetry device could wait a certain amount of time for the acknowledgement message and, if the acknowledgement message is not received in that amount of time, the carrier frequencies set in step 72 would remain as the default transmitting and receiving carrier frequencies for that telemetry device.

Note that this process of transmitting a response (in step 74) and an acknowledgement (in step 80) may be of the type known to those skilled in the art as "handshaking," and other forms of handshaking may be used in keeping with the principles of the invention. For example, multiple "ping" and response messages, repetition of the carrier frequency and message demodulating steps until a certain number of sufficiently similar results are obtained, and other types of handshaking processes may be used in the method 60.

If a response message is not successfully received in step 76, then in step 82 it will be determined whether a timeout period has expired and, if not, then additional attempts will be made to receive the response message in step 76. The timeout period is reset each time step 64 is performed, that is, each time the "ping" command is transmitted modulated on the initial or incremented carrier frequency, a certain time period is allowed for receiving in step 76 a response message from the initial receiving telemetry device.

If the timeout period has expired in step 82, then in step 84 a determination is made whether the carrier frequency just previously used for modulating the message in step 64 was the last frequency in a predetermined range of carrier frequencies. The initial carrier frequency used in step 64 is at one end of the predetermined range of carrier frequencies, and the last frequency is at the other end of the predetermined range of carrier frequencies, with the carrier frequency being incremented (either increasing or decreasing) between this range of frequencies.

If the carrier frequency just previously used for modulating the message in step 64 was not the last frequency in the predetermined range of carrier frequencies, then in step 86 the carrier frequency is incremented. After incrementing the carrier frequency, step 64 is performed again and the process described above is repeated.

Note that, unlike previous methods in which an entire frequency sweep is performed prior to selecting an optimum carrier frequency, in the method 60 the carrier frequency used in step 64 is only incremented as many times as needed (and perhaps zero times) until the correct response message is received in step 76. Thus, the method 60 is much more time efficient than prior methods (in that a usable carrier frequency can more quickly be determined for transmissions between the telemetry devices). Furthermore, the method 60 may also obtain the benefits of the method 40 in steps 66, 68, 76 and 78.

If in step 84 it is determined that the last frequency in the predetermined range of carrier frequencies has been used previously in step 64, then in step 88 the initial transmitting telemetry device may report that a suitable usable carrier frequency has not been found, and the method 60 may end at step 90. Alternatively, the method 60 could be repeated in one or more additional attempts to find a suitable usable carrier frequency, the method 60 could be repeated with an expanded predetermined range of carrier frequencies, etc.

Note that the carrier frequency set in step 80 is not necessarily the same carrier frequency set in step 72 due, for example, to frequency shifting.

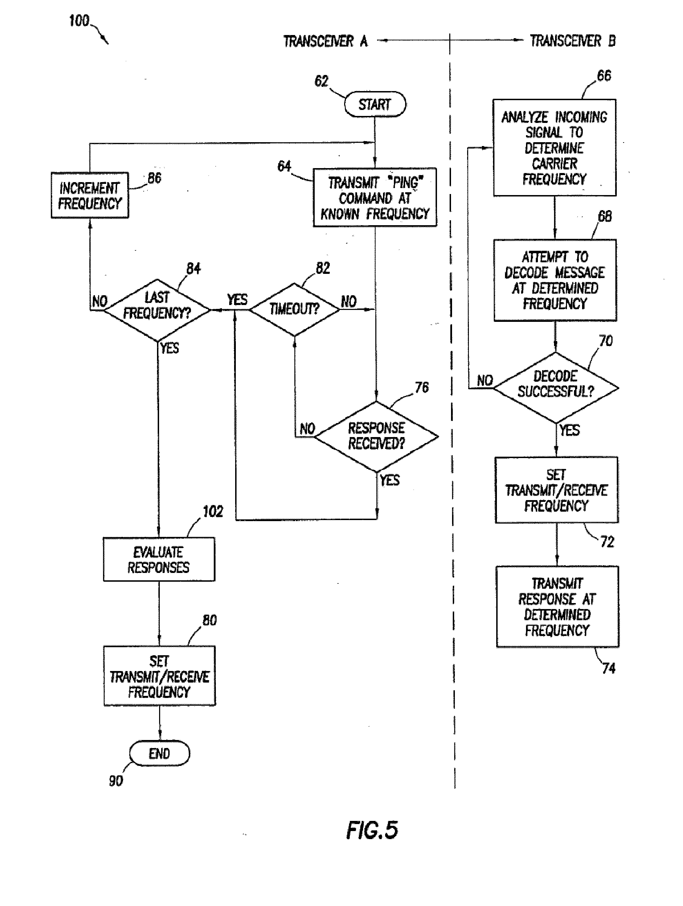

Referring additionally now to FIG. 5, another method 100 embodying principles of the invention is representatively illustrated in flowchart form. The method 100 is similar in many respects to the method 60 described above. However, instead of setting the carrier frequency in steps 72, 80 and stopping the process when the first correct response message is successfully received from the initial receiving telemetry device, the carrier frequency used in step 64 is incremented across the complete predetermined range of carrier frequencies (note that step 80 does not follow a step 78 in the method 100).

After the complete predetermined range of carrier frequencies has been used in step 64 (as determined in step 84), the responses received in step 76 are evaluated in step 102. In this evaluating step 102, certain characteristics of the responses are considered. These characteristics may include, for example, the signal power level, shape of the signal peak, coherence number, error rate, signal to noise ratio, carrier frequency shift, etc. for each response.

The evaluation step 102 may include assigning predetermined weights to each of the characteristics considered, so that the evaluation may be quantitatively performed without human intervention. Based on this evaluation, a preferred carrier frequency may be selected, again without human intervention.

Note that a preferred carrier frequency selected for transmission from one telemetry device to another (i.e., from the initial transmitting telemetry device to the initial receiving telemetry device and set in step 80) may not be the same as the preferred carrier frequency selected for transmission of messages in the opposite direction (i.e., from the initial receiving telemetry device to the initial transmitting telemetry device and set in step 72). For example, the well environment may be such that one carrier frequency is optimum for transmissions in one direction, while another carrier frequency is optimum for transmissions in the opposite direction.

Since the well environment is dynamic, the values of the characteristics considered in the evaluation step 102 will likely change over time. For example, the amount of frequency shift could change if the tubular string 12 elongates due to increased temperature, etc.

Thus, it is preferred that the method 100 is performed periodically at predetermined time intervals, at predetermined times, in response to certain events, etc., so that these changes can be accommodated. In this manner, the preferred carrier frequencies set in steps 72, 80 can be continuously updated as the well environment and the characteristics considered in the evaluation step 102 change.

For example, in the evaluating step 102, by monitoring a difference between the carrier frequency on which transmitted messages are modulated for transmission from one telemetry device to another telemetry device and the carrier frequency on which responses are modulated for transmission in the opposite direction, a change in frequency shift may be detected. This provides important information, for example, regarding in which direction an optimum carrier frequency is changing for one or both of the telemetry devices.

Thus, the carrier frequency on which the transmitted message is modulated for transmission from one telemetry device to the other telemetry device (e.g., in step 80) and the carrier frequency on which the response is modulated for transmission in the opposite direction (e.g., in step 72) may be altered, based on a change in the monitored difference. Preferably, the monitoring and altering steps are performed automatically, without human intervention, and at predetermined times, periodically at predetermined time intervals and/or in response to certain events.

It may now be fully appreciated that the principles of the invention provide significant benefits in the art of downhole wireless telemetry. In one example, a method 40 of detecting a carrier frequency in a downhole wireless telemetry system is provided which includes the steps of: transmitting from a first telemetry device 16 a transmitted message modulated on a predetermined carrier frequency; receiving at a second telemetry device 18 signals including multiple frequencies; and selecting from among the multiple received frequencies a carrier frequency on which the received message is modulated.

The selecting step may include a step 44 of processing the signals to detect the carrier frequency on which the received message is modulated. The processing step 44 may include utilizing a signal processing technique such as Fourier transform, digital filters and tone detection. Other spectral analysis techniques may be used to detect the carrier frequency on which the received message is modulated.

The method 40 may also include the steps 48, 50 of demodulating and decoding the received message. The method 40 may also include the steps 52, 54 of transmitting from the second telemetry device 18 to the first telemetry device 16 a response message modulated on the carrier frequency on which the received message is modulated. The response message may be transmitted only if the received message is successfully demodulated.

The transmitting steps 52, 54 may be performed without human intervention. The selecting steps 44, 46 may be performed without human intervention, and may be performed at predetermined times without human intervention.

In other embodiments, methods 60, 100 of detecting a usable downhole wireless telemetry system carrier frequency are provided. The methods 60, 100 may include the steps of: transmitting from a first telemetry device 16 a transmitted message modulated on a carrier frequency; then checking whether a response to the transmitted message is received at the first telemetry device from a second telemetry device 18; and each time the response is not received, repeating the transmitting and checking steps 64, 76 with an incremented carrier frequency (step 86).

The method 60 may also include the step of selecting (steps 76, 78) the usable carrier frequency as the carrier frequency on which the transmitted message is modulated and transmitted from the first telemetry device 16, and which first results in the response being correctly received at the first telemetry device (step 78). The method 60 may include the steps of receiving the response at the first telemetry device 16 a first time (step 76), and then selecting the usable carrier frequency as the transmitted initial or incremented carrier frequency on which the transmitted message was modulated and which caused the response to be correctly received the first time (step 78).

The selecting step may be performed without human intervention, or at predetermined times without human intervention. The method 60 may include setting the usable carrier frequency as the frequency on which future messages transmitted between the first and second telemetry devices 16, 18 are to be modulated (steps 72, 80).

In the method 100, the step of repeating the transmitting and checking steps 64, 76 may also be performed when the response is received and until a preselected range of carrier frequencies have been transmitted. The method 100 may also include the step 102 of evaluating characteristics of the responses received, and selecting a preferred carrier frequency based on the evaluating step. The selecting step may be performed without human intervention, and at predetermined times without human intervention.

The method 100 may include the step 102 of evaluating characteristics of the responses received, and based on the evaluating step selecting a preferred first carrier frequency for transmissions from the first telemetry device 16 to the second telemetry device 18 (set in step 80) and a preferred second carrier frequency for transmissions from the second telemetry device to the first telemetry device (set in step 72). The preferred first and second carrier frequencies may be different frequencies.

The response characteristics in the evaluating step 102 may include at least one of signal power level, shape of signal peak, coherence number, error rate, signal to noise ratio, and carrier frequency shift.

The methods 60, 100 may further include the step of, after the checking step 76, monitoring a difference between the carrier frequency on which the transmitted message is modulated for transmission from the first telemetry device 16 to the second telemetry device 18 and the carrier frequency on which the response is modulated for transmission from the second telemetry device to the first telemetry device.

The methods 60, 100 may further include the step of, after the step of repeating the transmitting and checking steps 64, 76, monitoring a difference between the carrier frequency on which the transmitted message is modulated for transmission from the first telemetry device 16 to the second telemetry device 18 and the carrier frequency on which the response is modulated for transmission from the second telemetry device to the first telemetry device. The monitoring step may be repeated periodically without human intervention.

The methods 60, 100 may further include the step of altering the carrier frequency on which the transmitted message is modulated for transmission from the first telemetry device 16 to the second telemetry device 18 and the carrier frequency on which the response is modulated for transmission from the second telemetry device to the first telemetry device based on a change in the monitored difference. The altering step may be performed without human intervention, and may be performed at predetermined times without human intervention.

In the methods 60, 100, the transmitting, checking and repeating steps 64, 76, 86 may be performed without human intervention, and may be performed at predetermined times without human intervention.

Of course, a person skilled in the art would, upon a careful consideration of the above description of representative embodiments of the invention, readily appreciate that many modifications, additions, substitutions, deletions, and other changes may be made to these specific embodiments, and such changes are within the scope of the principles of the present invention. Accordingly, the foregoing detailed description is to be clearly understood as being given by way of illustration and example only.

The following methods may be provided as recited in the following numbered statements 1 to 5 (which statements are not to be considered as claims).
1. A method of detecting a carrier frequency in a downhole wireless telemetry system, the method comprising the steps of:
   transmitting from a first telemetry device at least one transmitted message modulated on a predetermined carrier frequency;
   receiving at a second telemetry device signals including multiple frequencies; and
   selecting from among the multiple received frequencies a carrier frequency on which the received message is modulated.
2. A method according to 1, wherein the selecting step further comprises processing the signals to detect the carrier frequency on which the received message is modulated.
3. A method according to 2, wherein the processing step further comprises utilizing a signal processing technique including at least one of Fourier transform, digital filter and tone detection.
4. A method according to 2, wherein the processing step further comprises utilizing spectral analysis techniques to detect the carrier frequency on which the received message is modulated.
5. A method according to 1, further comprising the steps of demodulating and decoding the received message.

## Claims

1. A method (60, 100) of detecting a usable downhole wireless telemetry system carrier frequency, the method (60, 100) comprising the steps of:
transmitting from a first telemetry device (16) at least one transmitted message modulated on a carrier frequency;
then checking (76) whether a response to the transmitted message is received at the first telemetry device (16) from a second telemetry device (18); and
each time the response is not received, repeating the transmitting (64) and checking (76) steps with an incremented carrier frequency (86).

2. A method (60, 100) according to claim 1, further comprising the step of selecting the usable carrier frequency as the carrier frequency on which the transmitted message is modulated and transmitted from the first telemetry device (16), and which first results in the response being correctly received at the first telemetry device (16).

3. A method (60, 100) according to claim 1, further comprising the steps of receiving the response at the first telemetry device (16) a first time, and then selecting the usable carrier frequency as the transmitted initial or incremented carrier frequency on which the transmitted message was modulated and which caused the response to be correctly received the first time.

4. A method (60, 100) according to claim 3, wherein the selecting step is performed without human intervention.

5. A method (60, 100) according to claim 3, wherein the selecting step is performed at predetermined times without human intervention.
